# EUROPÄISCHE PATENTSCHRIFT

(11) **EP 1 189 786 B1**
(45) Veröffentlichungstag und Bekanntmachung des Hinweises auf die Patenterteilung: **08.01.2003**
(21) Anmeldenummer: 00935017.4
(22) Anmeldetag: 13.05.2000
(51) Int. Cl.: B60R 16/02, G08G 1/09

(54) **VERNETZTES FAHRZEUGKOMMUNIKATIONSSYSTEM MIT FRONTEND-EINHEIT, BENUTZERBEDIENBAREM ENDGERÄT UND ZUGEHÖRIGER APPLIKATION**
NETWORKED VEHICLE COMMUNICATIONS SYSTEM COMPRISING A FRONT-END UNIT, A TERMINAL THAT CAN BE OPERATED BY A USER, AND A CORRESPONDING APPLICATION
SYSTEME DE COMMUNICATION EN RESEAU POUR VEHICULE, DOTE D'UNE UNITE FRONTALE, TERMINAL COMMANDE PAR L'UTILISATEUR ET APPLICATION ASSOCIEE

(30) Priorität: 26.06.1999 DE 19929331
(43) Veröffentlichungstag der Anmeldung: 27.03.2002
(73) Patentinhaber: DaimlerChrysler AG, 70567 Stuttgart (DE); ROBERT BOSCH GmbH, 70469 Stuttgart (DE)
(72) Erfinder: GÖBEL, Fridjof, D-74354 Besigheim (DE); HAHN, Ralf, D-55252 Main-Kastel (DE); HUDEL, Peter, D-61169 Friedberg (DE); KOBURG, Cornelius, D-64319 Pfungstadt (DE); LUTZ, Peter, D-61479 Glashütten (DE); SCHNEIDER, Jutta, 72076 Tübingen (DE)
(86) Internationale Anmeldenummer: EP0004336
(87) Internationale Veröffentlichungsnummer: WO01001261

(56) Entgegenhaltungen:
- EP-A- 0 566 482
- DE-A- 4 218 804
- US-A- 5 521 588
- US-A- 5 794 164
- FROTVEIT T ET AL: "MODELING ADVANCED TRANSPORT TELEMATICS ARCHITECTURE USING FORMAL DEFINITION TECHNIQUES PROPOSAL FOR A METHODOLOGY THAT INCORPORATES EXTENSIONS TO SDL ANDER" PACIFIC RIM TRANSTECH CONFERENCE. VEHICLE NAVIGATION AND INFORMATION SYSTEMS CONFERENCE PROCEEDINGS,US,NEW YORK, IEEE, Bd. CONF. 6, 30. Juli 1995 (1995-07-30), Seiten 458-464, XP000641174 ISBN: 0-7803-2588-5
- CHUNG P E ET AL: "DCOM AND CORBA SIDE BY SIDE, STEP BY STEP, AND LAYER BY LAYER" C PLUS PLUS REPORT,SIGS PUBLICATIONS, INC. NEWYORK, NY,US, Bd. 10, Nr. 1, Januar 1998 (1998-01), Seiten 18-29,40, XP000951683 ISSN: 1040-6042

## Beschreibung

Die Erfindung bezieht sich auf ein Fahrzeugkommunikationssystem mit einem Datenbus, an den wenigstens eine Frontend-Einheit mit Benutzerschnittstellen-Frameworkeinheit und ein benutzerbedienbares Endgerät angeschlossen sind, sowie wenigstens einer in das System implementierten, unter Beteiligung der Frontend-Einheit und des Endgerätes ausführbaren Applikation, nachfolgend auch Funktionalität bezeichnet.

In modernen Kraftfahrzeugen, insbesondere auch Automobilen, sind zahlreiche Funktionalitäten implementiert, die unter Beteiligung jeweils zugehöriger Frontend-Einheiten, welche zugehörige Benutzerschnittstellen beinhalten, im Dialog mit dem Systemnutzer ausgeführt werden, insbesondere zahlreiche Telematik-Anwendungen, wie sie beispielsweise in der Offenlegungsschrift DE 196 25 002 A1 angeführt sind.

DE 42 18 804 offenbart ein Fahrzeugkommunikationssystem in dem die Displays und die Endgeräte mit einem zentralen Informations Management System verbunden sind.

Um die sich daraus ergebenden Anforderungen bestmöglich zu erfüllen, wird in jüngerer Zeit zunehmend die Verwendung sogenannter verteilter Systeme betrachtet, insbesondere solchen, die auf objektorientierten Komponentenmodellen basieren. In der allgemeinen EDV mit den dort gegenüber Fahrzeuganwendungen vorhandenen höheren Rechenkapazitäten sind bereits Technologien zur Unterstützung solcher verteilter Komponentensysteme gebräuchlich, z.B. CORBA (Common Object Request Broker Architecture) und DCOM (Distributed Component Object Model). Diese Techniken lassen sich jedoch nicht gut auf kleine eingebettete Einheiten skalieren. Zudem ist DCOM jedenfalls gegenwärtig noch nicht für das Betriebssystem Windows CE erhältlich. Zu fahrzeugseitigen Konzepten für verteilte Systeme sei z.B. auf den Zeitschriftenaufsatz K.J. Neumann et al., Ein aufkommender Standard für verteilte Systeme im Kfz, atp 4/98, Seite 22 und die ältere deutsche Patentanmeldung 199 09 157.9 nebst der dort zitierten Literatur hingewiesen.

Der Erfindung liegt als technisches Problem die Bereitstellung eines Fahrzeugkommunikationssystems der eingangs genannten Art zugrunde, das mit für Fahrzeuganwendungen vertretbarem Rechenaufwand einen Mechanismus für die Realisierung von verteilten, auszuführenden Applikationen unter Nutzung von in Fahrzeugen gebräuchlichen Datenbusnetzwerken ermöglicht und bei dem die Applikation dabei möglichst unabhängig vom Typ des verwendeten Bussystems gehalten werden kann.

Die Erfindung löst dieses Problem durch die Bereitstellung eines Fahrzeugkommunikationssystems mit den Merkmalen des Anspruchs 1. Bei diesem System ist eine Aufteilung der jeweiligen implementierten Funktionalität in einen Teil mit Benutzerschnittstellenseiten und in einen Teil mit den Funktionskomponenten vorgesehen. Wenigstens der Benutzerschnittstellenseitenteil ist Teil der Frontend-Einheit, während sich der Funktionskomponententeil ebenfalls dort oder aber in einer anderen Frontend-Einheit oder einer ebenfalls an den Datenbus angeschlossenen Mehrzweckplattform-Einheit befindet. Der Benutzerschnittstellenseitenteil steht mit der Benutzerschnittstellen-Frameworkeinheit in der betreffenden Frontend-Einheit in Verbindung, während entsprechend der Funktionskomponententeil mit einer zugehörigen Applikations-Frameworkeinheit in Kommunikationsverbindung steht. Dieser Systemaufbau stellt einen Mechanismus für die Realisierung von verteilten, auszuführenden Funktionalitäten bereit, insbesondere auch hinsichtlich der dazu auszuführenden Teilfunktionen, wie Anzeige, Bedienung und Interaktion mit anderen Applikationsmodulen, mit einem für Fahrzeuganwendungen vertretbaren Rechenaufwand.

In Weiterbildung der Erfindung nach Anspruch 2 ist dem jeweiligen Funktionskomponententeil eine virtuelle Endgeräteeinheit zugeordnet, über welche die Kommunikation mit dem betreffenden benutzerbedienbaren Endgerät über den Datenbus erfolgt und welche die hierzu benötigten busspezifischen Implementierungsinformationen enthält. Dadurch lassen sich die Funktionskomponenten im wesentlichen unabhängig vom Typ des jeweils verwendeten Datenbussystems halten, so daß sie nicht zwingend jedes Mal implementiert werden müssen, wenn ein anderer Bustyp zum Einsatz kommt.

Bei einem nach Anspruch 3 weitergebildeten System befindet sich der Funktionskomponententeil nicht in der gleichen Einheit wie der Benutzerschnittstellenseitenteil, sondern in einer anderen, an den Datenbus angeschlossenen Einheit. Die Kommunikation zwischen beiden Teilen erfolgt dann in Form einer Proxy-Stub-Kommunikation über den Datenbus. Bei dieser Systemauslegung brauchen die Benutzerschnittstellenseiten keine Kenntnis über die aktuell vorhandene, verteilte Systemumgebung besitzen, sondern sie greifen auf die zugeordneten Proxy-Komponenten zu, welche die notwendigen Netzwerkoperationen realisieren. In der anderen Einheit, d.h. einer weiteren Frontend-Einheit oder einer vorzugsweise zentral für mehrere Frontend-Einheiten vorgesehenen Mehrzweckplattform-Einheit, fungiert die jeweilige Stub-Komponente als Client der Funktionskomponenten und kommuniziert mit der zugehörigen Proxy-Komponente der erstgenannten Frontend-Einheit. Da der gesamte Netzwerkcode in den Proxy- und Stub-Komponenten sitzt, kann jeglicher applikationsspezifischer Code völlig unabhängig vom zugrundeliegenden Datenbusnetzwerk gehalten werden, ohne in die Vernetzung involviert zu sein, was seine Codierung und Aufrechterhaltung vereinfacht.

Vorteilhafte Ausführungsformen der Erfindung sind in den Zeichnungen dargestellt und werden nachfolgend beschrieben. Hierbei zeigen:
- Fig. 1: ein schematisches, ausschnittweises Blockdiagramm eines Fahrzeugkommunikationssystems mit Frontend-Einheit und Mehrzweckplattform-Einheit,
- Fig. 2: ein schematisches, ausschnittweises Blockdiagramm eines Fahrzeugkommunikationssystems mit gemeinsamer Implementierung von Benutzerschnittstellenseitenteil und Funktionskomponententeil einer Applikation in einer Frontend-Einheit und
- Fig. 3: ein schematisches, ausschnittweises Blockdiagramm eines Fahrzeugkommunikationssystems mit zwei Frontend-Einheiten und auf diese verteilten Funktionalitäten.

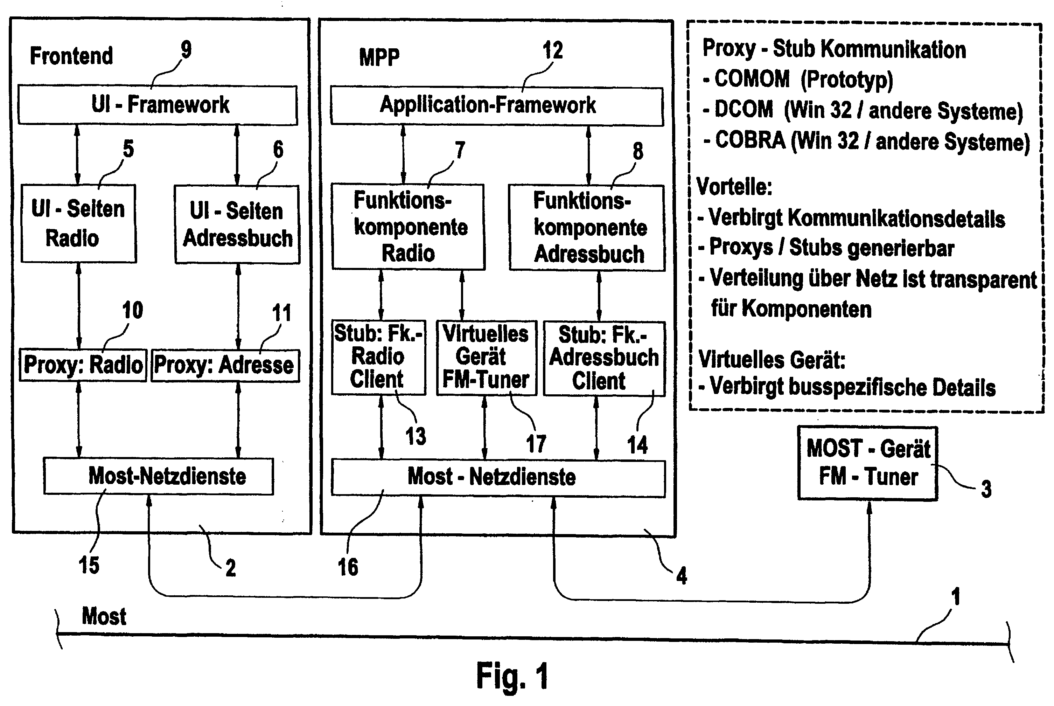

Bei dem in Fig. 1 gezeigten, ersten Ausführungsbeispiel beinhaltet das Fahrzeugkommunikationssystem einen herkömmlichen optischen Datenbus 1 des Typs MOST, an den eine Frontendeinheit 2, ein benutzerbedienbares Endgerät 3 und eine Mehrzweckplattform-Einheit 4 angeschlossen sind. Weitere Bestandteile des Fahrzeugkommunikationssystems, insbesondere noch weitere Frontend-Einheiten und benutzerbedienbare Endgeräte sowie Fahrzeugsteuergeräte, sind der Übersichtlichkeit halber nicht gezeigt. Im gezeigten Systemteil sind zur Erläuterung der Erfindung beispielhaft zwei Applikationen implementiert, nämlich eine Radio-Funktionalität und eine Adressbuch-Funktionalität. Bei der Frontend-Einheit 2 handelt es sich konkret um eine Anzeige- und Bedieneinheit 2 für diese Funktionalitäten, während es sich bei dem benutzerbedienbaren, zugehörigen Endgerät 3 und einen für den MOST-Datenbus 1 ausgelegten FM-Tuner handelt.

Charakteristischerweise ist die jeweilige Funktionalität jeweils in einen in die Frontend-Einheit 2 implementierten Benutzerschnittstellenseitenteil und einen in die Mehrzweckplattform-Einheit 4 implementierten Funktionskomponententeil aufgeteilt, d.h. die Frontend-Einheit 2 beinhaltet eine Komponente 5 mit Benutzerschnittstellenseiten (UI pages) für die Radio-Funktionalität und eine Komponente 6 mit Benutzerschnittstellenseiten für die Adressbuch-Funktionalität. Entsprechend besitzt die Mehrzweckplattform (MPP)-Einheit 4 einen Funktionskomponententeil 7 für die Radio-Funktionalität und einen Funktionskomponententeil 8 für die Adressbuch-Funktionalität. Die Benutzerschnittstellenseitenteile 5, 6 stehen in der Frontend-Einheit 2 zum einen mit einer dort implementierten Benutzerschnittstellen-Frameworkeinheit 9 und zum anderen mit je einer zugehörigen Proxy-Komponente 10, 11 in Verbindung. In der MPP-Einheit 4 stehen die Funktionskomponententeile 7, 9 zum einen mit einer Applikations-Frameworkeinheit 12 und zum anderen mit zugehörigen Stub-Komponenten 13, 14 in Verbindung. Busseitig stehen die Proxy- und Stub-Komponenten 10, 11, 13, 14 mit einer für den gewählten Bustyp MOST geeigneten Netzwerkdienst-Endstufe (Most Net Services) 15, 16 in Verbindung, über welche die jeweilige Anbindung an den Datenbus 1 erfolgt.

In der MPP-Einheit ist zudem eine virtuelle Endgeräteeinheit 17 als virtuelles FM-Tunergerät implementiert. In dieser virtuellen Einheit ist die Kommunikation des zugehörigen Funktionskomponententeils, hier des Teils 7 für die Radio-Funktionalität, mit dem speziell verwendeten, benutzerbedienbaren Endgerät, hier dem für den MOST-Datenbus 1 bestimmten FM-Tuner 3, enthalten, d.h. die virtuelleEinheit 17 bewerkstelligt die Kommunikation ihres zugehörigen Funktionskomponententeils 7 mit dem speziellen zugehörigen benutzerbedienbaren Endgerät 3 über den vorhandenen Datenbus 1 und enthält dazu die busspezifischen Implementierungsdetails der Funktionskomponenten. Dies hat die erwünschte Konsequenz, daß die im Funktionskomponententeil 7 enthaltenen Funktionskomponenten unabhängig vom jeweils gerade benutzten Bussystem 1 bleiben und daher nicht automatisch mit einer Änderung desselben geändert werden müssen.

Bekanntermaßen bringt eine verteilte Systemauslegung eine Menge an Komplexität mit sich, wobei es empfehlenswert ist, die Systeme auf der höchsten verfügbaren Schicht im ISO/OSI-Netzwerk-Schichtenmodell mit den Schichten 1 (physikalische Verbindung) bis 7 (Präsentationsschicht) aufzubauen, um auf diese Weise so viele Netzwerkdetails wie möglich unsichtbar zu lassen und sich auf die Applikationsanforderungen des Systems zu konzentrieren. Genau dies beabsichtigt der MOST-Standard für Multimedia-Applikationen im Fahrzeug. MOST beschäftigt sich jedoch hauptsächlich mit der Kommunikation zwischen Endgeräten wie CD-Player, Tunern und CD-Wechslern und nicht mit der zwischen Frontend-Einheit 2 und MPP-Einheit 4 wünschenswerten Kommunikation auf höherem Level.

Die verwendete Proxy-Stub-Kommunikation ermöglicht die Erfüllung dieser Anforderungen unter Beibehaltung des MOST-Datenbusses 1, wobei die hierdurch gegebene, vorliegende Systemlösung als Prototyp COMOM bezeichnet ist, siehe das Systembeschreibungs-Insert in Fig. 1. Diese Systemlösung stellt eine Kommunikationsfunktion auf hohem Level zur Verfügung, analog zum COM/DCOM-Standard, und verwendet dabei die Steuerungs- und asynchronen Kanäle des MOST-Datenbusses 1. Da die Schnittstellennotation des Prototyps COMOM mit COM-IDL kompatibel ist, kann COMOM durch DCOM ersetzt werden, sobald diese Technologie für Windows CE verfügbar ist. Als weitere Alternative kommt der Einsatz von CORBA in Betracht, wenn ein anderes Betriebssystem verwendet wird. CORBA-Implementierungen sind für wichtige eingebettete Betriebssysteme verfügbar, wie QNX, Chorus, VxWorks u.a.

Gemäß der Systemauslegung von Fig. 1 besteht der Benutzerschnittstellenteil der Applikation aus den Benutzerschnittstellenseiten 5, 6, welche in die Benutzerschnittstellen-Framework-Einheit 9 eingebettet sind und mit dieser kommunizieren. Um auf die im jeweiligen Funktionskomponententeil 7, 8 implementierte Funktionalität zurückzugreifen, benötigen die Benutzerschnittstellenseiten 5, 6 keine Kenntnis über die aktuelle verteilte Systemumgebung. Stattdessen greifen sie auf die zugehörige Proxy-Komponente 10, 11 der Funktionskomponenten zu, die entsprechend agieren und dabei die notwendigen Netzwerkoperationen realisieren. Die in der MPP-Einheit 4 befindlichen Stub-Komponenten 13, 14 agieren als Clients der Funktionskomponenten 7, 8 und kommunizieren über den Datenbus 1 mit den Proxy-Komponenten 10, 11 auf Seiten der Frontend-Einheit 2. In den Proxy- und Stub-Komponenten 10, 11, 13, 14 ist der gesuchte Netzwerkcode abgelegt, so daß der gesamte applikationsspezifische Code völlig unabhängig vom zugrundeliegenden Datenbusnetzwerk 1 gehalten werden kann und nicht in die Vernetzung involviert sein braucht, was es leichter macht, ihn zu kodieren und beizubehalten. Die Proxy- und Stub-Komponenten 10, 11, 13, 14 können automatisch durch IDL-Compiler erzeugt werden, die für COM/DCOM- und CORBA-Produkte verfügbar sind.

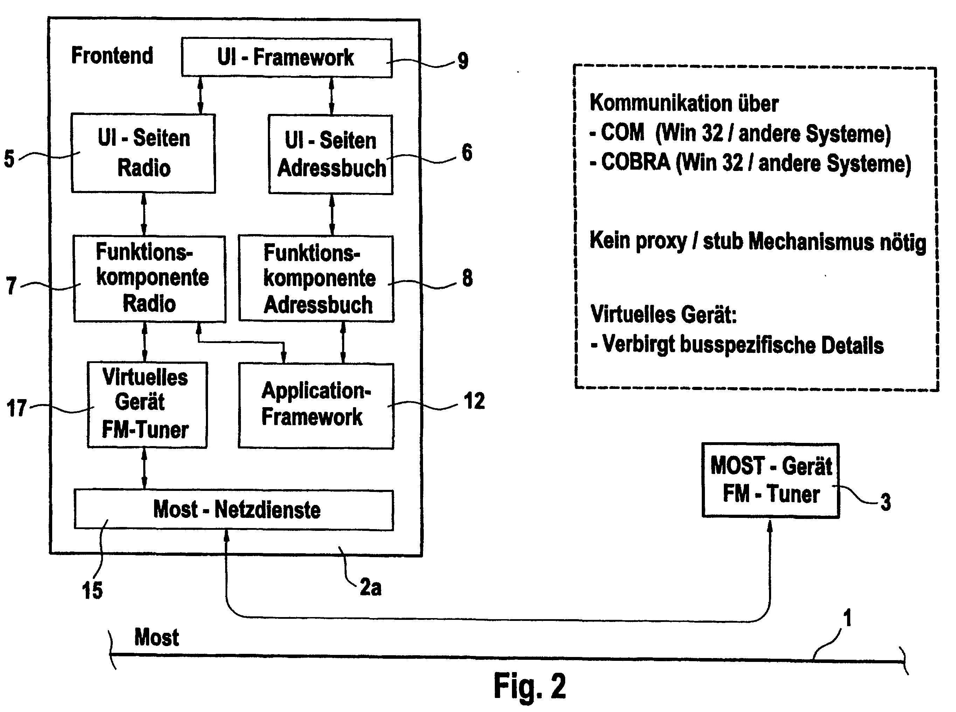

Wie aus der obigen Beschreibung erkennbar, läßt sich das Fahrzeugkommunikationssystem erfindungsgemäß so auslegen, daß völlige Transparenz der Verteilung über das Netzwerk für die Komponenten erzielt wird. Während bei einer Auslegung von Fig. 1 die MPP-Einheit 4 vorzugsweise als zentrale Recheneinheit fungiert, die mehrere Frontend-Einheiten und mehrere Applikationen bedient, besteht ein weiterer Vorteil der Erfindung darin, daß auch eine Systemauslegung ohne Vernetzung möglich ist, d.h. ein System ohne die Funktionalität der MPP-Einheit 4 von Fig. 1. Ein solches System ist als zweites Ausführungsbeispiel der Erfindung in Fig. 2 ausschnittweise dargestellt, wobei funktionell gleiche Bestandteile mit denselben Bezugszeichen wie in Fig. 1 versehen sind und insoweit auf die obige Beschreibung zu Fig. 1 verwiesen werden kann.

Wie aus Fig. 2 ersichtlich, sind bei dieser Systemrealisierung die Bestandteile der MPP-Einheit von Fig. 1 zusätzlich zu den Bestandteilen der Frontend-Einheit 2 von Fig. 1 in einer einzigen, insoweit modifizierten Frontend-Einheit 2a aufgenommen. Dadurch wird kein Netzwerkcode für die Kommunikation zwischen dem Benutzerschnittstellenseitenteil 5, 6 und dem zugehörigen Funktionskomponententeil 7, 8 einer jeweiligen Applikation benötigt, so daß hier die Proxy- und Stub-Komponenten 10, 11, 13, 14 des Systems von Fig. 1 entfallen. Die Benutzerschnittstellenseiten 5, 6 kommunizieren in diesem Beispiel direkt mit den zugehörigen Funktionskomponenten 7, 8. Diese Kommunikation kann z.B. wiederum über COM/CORBA realisiert sein, siehe auch das Systembeschreibungs-Insert von Fig. 2.

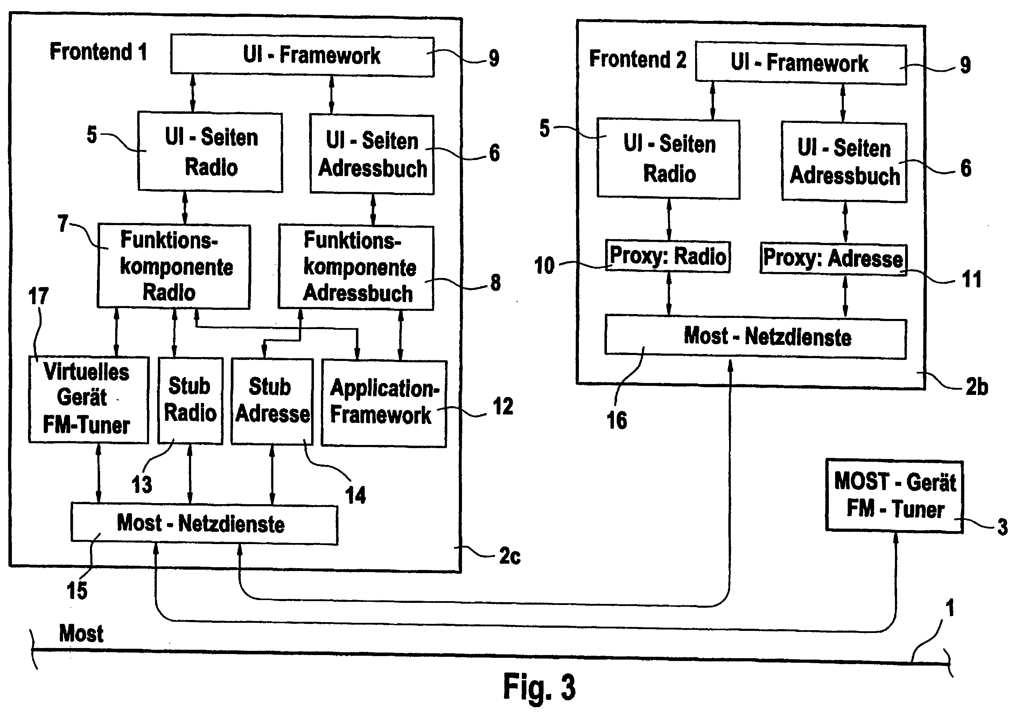

Eine weitere mögliche Systemauslegung ist in Fig. 3 dargestellt, wobei wiederum funktionell gleiche Bestandteile mit denselben Bezugszeichen wie in den Fig. 1 und 2 versehen sind und insoweit auf die obige Beschreibung zu den Fig. 1 und 2 verwiesen werden kann.

Wie aus Fig. 3 ersichtlich, sind die beiden beispielhaften Applikationen (Radio, Adressbuch) in dieser Realisierung in zwei Frontend-Einheiten 2b, 2c implementiert, von denen die eine Frontend-Einheit 2b analog zur Frontend-Einheit 2 von Fig. 2 ohne den Funktionskomponententeil aufgebaut ist, während die andere Frontend-Einheit 2c als selbständige Einheit entsprechend der Frontend-Einheit 2a von Fig. 2 ausgelegt ist, welche sowohl den jeweiligen Benutzerschnittstellenseitenteil 5, 6 als auch den zugehörigen Funktionskomponententeil 7, 8 enthält. Dabei genügt dann für die nicht mit dem Funktionskomponententeil versehene Frontend-Einheit 2b die Verwendung von weniger leistungsfähiger Hardware als für die andere Frontend-Einheit 2c, auf der die Funktionskomponenten ablaufen.

Nachfolgend werden beispielhaft einige mögliche Applikationen angegeben, die zugehörige, implementierte Software-Pakete umfassen. So kann ein Audio-Paket vorgesehen sein, das vorhandene Audio-Hardware steuert und die Führung der entsprechenden Daten von Audio-Quellen zu Audio-Ausgabegeräten vornimmt. Die zugehörige Audio-Hardware umfaßt eine zentrale Audio-Ausgabe über Lautsprecher und die Ausgabe über an Frontend-Einheiten verfügbare Kopfhörer unter Steuerung der Lautstärke und anderer Audio-Parameter. Dabei können fahrzeugspezifische Eigenschaften realisiert sein, wie z.B. eine Leiseschaltung einer gerade aktiven Audio-Quelle auf eine geringere Lautstärke, wenn eine Sprachausgabe aktiv wird.

Eine Telefon-Applikation kann zur Steuerung einer GSM-Funktionalität, zur Implementierung der TAPI, insbesondere für Sprachverbindungen, zum Wählen von Telefonnummern, Akzeptieren oder Zurückweisen von Anrufen und Verwalten einer Anrufliste, sowie zur Bereitstellung von Datenverbindungen über WAP dienen. Ein Radio-Paket ist, wie oben beschrieben, zur Steuerung der Tuner-Hardware, wie eines MOST-FM-Tuners, vorgesehen und ist zweckmäßigerweise so ausgelegt, daß es decodierte RDS-Nachrichten für andere Dienste, wie TMC, bereitstellt und Voreinstellungen sowie Stationslisten für die installierten Frontend-Einheiten verwaltet. Ein CD-Player/Video-Player-Paket steuert CD-Player-Hardware, die aus mehreren Geräten bestehen kann, z.B. einem CD-Wechsler und je einem CD-Player in mehreren Frontend-Einheiten. Das Paket übernimmt die Verwaltung von Abspiellisten, die Erzeugung beliebiger Abspiellisten und die optische Anzeige des momentanen Zustands der Abspielgeräte. Soweit vorhanden, kann dieses Paket auch zum Abspielen von Videodisks verantwortlich sein.

Ein Fahrzeug-Paket kann dazu dienen, auf Fahrzeugdatenbussen, wie einem CAN-Bus, verfügbare Fahrzeuginformationen bereitzustellen, indem diese gesammelt und über vorgegebene Schnittstellen zur Verfügung gestellt werden. Bei diesen Fahrzeuginformationen kann es sich z.B. um solche über die Geschwindigkeit, die bevorratete Kraftstoffmenge und diverse Temperaturangaben handeln. Die Informationen können optisch angezeigt und/oder anderen Diensten verfügbar gemacht werden.

Ein Profil-Paket ist für die Speicherung von Profilen von Komponenten, zur Feststellung von Komponenten, die von einer Profiländerung betroffen sind, um eine Reinitialisierung vorzunehmen, und zur Erzeugung neuer Profile dienlich. Die Profile werden zur Speicherung von Einstellungen von Komponenten und der Benutzerschnittstelle verwendet, wie Farben, Audio-Einstellungen etc., und in jeder Frontend-Einheit separat abgelegt. Ein Personenmanagement-Paket enthält Funktionalität für persönliche Informationen über einen identifizierten Systemnutzer, wie ein persönliches Adressbuch, einen Kalender, eine Email-Funktion und Datensynchronisation mit anderen Datenbasen, wie anderen Fahrzeugen oder einem stationären PC-System, z.B. über das Internet oder mit Bluetooth-Technologie.

Ein weiteres Paket dient dazu, die Erlaubnis für angeforderte Benutzeraktionen zu erteilen und dabei insbesondere Konflikte zu behandeln, wenn mehrere Systemnutzer dieselbe Systemfunktionalität anfordern, diese zum jeweiligen Zeitpunkt jedoch nur von einem Nutzer benutzt werden kann. Dieses Paket kann außerdem dazu verwendet werden, sitzplatzbezogene Nutzungsrechte für bestimmte Nutzer zu beschränken, z.B. für Kinder, bzw. die Profile für Freigaben und Anpassungen von Rechten zu verwalten. Ein Nutzeridentifikations-Paket ist für die Zuführung einer Nutzerkennung an Komponenten verantwortlich, die eine solche benötigen, wie Adressbuch, Email, Kalender etc. Der Systemnutzer muß dann seine Identität geeignet eingeben, z.B. mittels PIN, Paßwort, Fingerabdruck oder Netzhautabtastung. Ein Komfort-Paket ermöglicht die Steuerung von Klimatisierungseinheiten und anderen Komfort-Funktionen, soweit im Fahrzeug vorhanden.

Ein Telematikdienste-Paket ist verantwortlich für das Sammeln generischer Telematikdienstinformationen und das Verteilen an anfordernde Komponenten. Ein Aktualisierungs-Paket verwaltet Aktualisierungen und Aufrüstungen von Komponenten und ist verantwortlich für das Herunterfahren des Systems in einen Zustand, in welchem eine Aktualisierung/Aufrüstung durchgeführt werden kann, sowie für das erneute Verbringen des Systems in den normalen Betriebsmodus. Ein Initialisierungs-, Überwachungs- und Diagnose-Paket ist verantwortlich für die Durchführung von Start- und Initialisierungsvorgängen, enthält die Fähigkeit zur Überwachung des Betriebs von Software- und Hardware-Komponenten und unterstützt eine Diagnose des Systems.

Ein Zusatzdienste-Paket kann zur Bereitstellung von Funktionalitäten vorgesehen sein, die auf herkömmliche Systemfähigkeiten aufsetzen. Bei diesen Zusatzfunktionalitäten kann es sich z.B. um einen Notruf, z.B. automatisch bei einem erkannten schwereren Unfall oder halbautomatisch auf Benutzeranforderung jeweils in Form von übertragenen Daten über die Fahrzeugposition oder in Sprachform, eine Logbuch-Funktion, wie sie zur Kostenerfassung bei Firmenfahrzeugen und zu anderen Zwecken nützlich ist, sowie einen Diebstahlschutz handeln, mit dem das System bei Vorhandensein eines Ortungsmoduls eine Bewegung des Fahrzeugs außerhalb bestimmter Grenzen feststellen und den Fahrzeugbetrieb bei Bedarf stoppen kann.

## Patentansprüche

1. Fahrzeugkommunikationssystem mit
- einem Datenbus (1) und wenigstens einer daran angeschlossenen Frontendeinheit (2) mit einer Benutzerschnittstellen-Frameworkeinheit (9),
- wenigstens einem benutzerbedienbaren, an den Datenbus angeschlossenen Endgerät (3) und
- wenigstens einer in das System implementierten, unter Beteiligung der Frontend-Einheit und des Endgerätes ausführbaren Funktionalität,
**dadurch gekennzeichnet, daß**
- die implementierte Funktionalität in einen mit der Benutzerschnittstellen-Frameworkeinheit (9) kommunizierenden Teil (5, 6) mit Benutzerschnittstellenseiten und in einen mit dem Benutzerschnittstellenseitenteil einerseits und einer Applikations-Frameworkeinheit (12) andererseits kommunizierenden Funktionskomponententeil (7, 8) aufgeteilt ist und
- sich der Benutzerschnittstellenseitenteil in der Frontend-Einheit (2) befindet und sich der Funktionskomponententeil (7, 8) ebenfalls in dieser Frontend-Einheit oder in einer anderen, an den Datenbus angeschlossenen Frontend-Einheit oder einer an den Datenbus angeschlossenen Mehrzweckplattform-Einheit (4) befindet.

2. Fahrzeugkommunikationssystem nach Anspruch 1, weiter
**dadurch gekennzeichnet, daß**
dem Funktionskomponententeil (7) eine virtuelle Endgeräteeinheit (17) zugeordnet ist, über welche der Funktionskomponententeil zur Kommunikation mit dem benutzerbedienbaren Endgerät (3) über den Datenbus (1) verbunden ist und welche busspezifische Implementierungsinformationen enthält.

3. Fahrzeugkommunikationssystem nach Anspruch 1 oder 2, weiter
**dadurch gekennzeichnet**, d a ß
- sich der Funktionskomponententeil (7, 8) in der anderen Frontend-Einheit (2c) oder der Mehrzweckplattform-Einheit (4) befindet und
- dem Funktionskomponententeil (7, 8) eine Stub-Komponente (13, 14) sowie dem Benutzerschnittstellenseitenteil (5, 6) eine Proxy-Komponente (10, 11) zur Kommunikation zwischen Funktionskomponententeil und Benutzerschnittstellenseitenteil zugeordnet ist.

## Claims

1. Vehicle communications system with
- a data bus (1) and at least one front-end unit (2) with a user interface-framework unit (9) connected thereto,
- at least one user-operated terminal (3) connected to the data bus and
- at least one function, implemented in the system, which can be run in conjunction with the front-end unit and the terminal,
**characterised in that**
- the implemented function is split between a part (5, 6) with user interface pages communicating with the user interfaces framework unit (9) and a function components part (7, 8) communicating on the one hand with the user interface pages part and on the other with an application framework unit (12) and
- the user interface pages part is located in the front-end unit (2) and the functions component part (7, 8) is also located in this front-end unit or in another front-end unit connected to the data bus or a multi-purpose platform unit (4) connected to the data bus.

2. Vehicle communications system as claimed in claim 1, further **characterised in that** a virtual terminal unit (17) is assigned to the function components part (7), via which the function components part is connected to the user-operated terminal (3) across the data bus (1) for communication purposes and which contains bus-specific implementing information.

3. Vehicle communications system as claimed in claim 1 or 2, further **characterised in that**
- the function components part (7, 8) is located in the other front-end unit (2c) or the multi-purpose platform unit (4) and
- a stub component (13, 14) is assigned to the function components part (7, 8) and a proxy component (10, 11) to the user interface pages part (5, 6) to communicate between function components part and user interface pages part.

## Revendications

1. Système de communication de véhicule comportant
◆ un bus de transmission de données (1) et au moins une unité d'extrémité frontale (2) qui y est raccordée et comporte une unité formant cadre d'interface d'utilisateur (9),
◆ au moins un appareil terminal (3) pouvant être actiônné par l'utilisateur et raccordé au bus de transmission de données, et
◆ au moins une fonctionnalité mise en oeuvre dans le système et pouvant être exécutée moyennant la participation de l'unité d'extrémité frontale et de l'appareil terminal, **caractérisé en ce que**
◆ la fonctionnalité mise en oeuvre est répartie en une partie (5, 6), qui communique avec l'unité formant cadre d'interface d'utilisateur (9) et avec des côtés d'interface d'utilisateur et en une partie de composant fonctionnel (7, 8) communiquant d'une part avec la partie du côté d'interface d'utilisateur et d'autre part avec une unité de cadre d'application (12), et
◆ la partie du côté d'interface d'utilisateur est située dans l'unité d'extrémité frontale (2), et la partie de composant fonctionnel (7, 8) est située également dans cette unité d'extrémité frontale ou dans une autre unité d'extrémité frontale raccordée au bus de transmission de données ou dans une unité (4) de plateforme à usages multiples accordée au bus de transmission de données.

2. Système de communication de véhicule selon la revendication 1, **caractérisé en outre en ce que** la partie de composant fonctionnel (7) est associée à une unité virtuelle d'appareil terminal (17), au moyen de laquelle la partie de composant fonctionnel est reliée pour la communication avec l'appareil terminal (3) pouvant être actionné par l'utilisateur, par l'intermédiaire du bus de transmission de données (1) qui contient des informations de mise en oeuvre spécifiques au bus.

3. Système de communication de véhicule selon la revendication 1 et 2, **caractérisé en ce que** la partie de composant fonctionnel (7, 8) est située dans l'autre unité d'extrémité avant (2c) ou dans l'unité (4) de plateforme à usages multiples, et un composant Stub (13, 14) est associé à la partie de composant fonctionnel (7, 8) et un composant Proxy (10, 11) est associé à la partie (5, 6) du côté d'interface de l'utilisateur pour la communication entre la partie de composant fonctionnel et la partie du côté de l'interface d'utilisateur.
